# EUROPÄISCHE PATENTSCHRIFT

(11) **EP 2 320 755 B1**
(45) Veröffentlichungstag und Bekanntmachung des Hinweises auf die Patenterteilung: **11.11.2015**
(21) Anmeldenummer: 09782526.9
(22) Anmeldetag: 02.09.2009
(51) Int. Cl.: A23L 1/317, A23B 4/00, A23L 3/015, A23L 1/31

(54) **VERFAHREN ZUR STEUERUNG DER PRODUKTEIGENSCHAFTEN BEI DER HERSTELLUNG VON FLEISCHWAREN**
METHOD FOR CONTROLLING PRODUCT CHARACTERISTICS IN THE MANUFACTURE OF MEAT PRODUCTS
PROCÉDÉ PERMETTANT DE MODULER LES PROPRIÉTÉS DES PRODUITS LORS DE LA PRODUCTION DE DENRÉES À BASE DE VIANDE

(30) Priorität: 03.09.2008 DE 102008045666; 25.09.2008 DE 102008048543
(43) Veröffentlichungstag der Anmeldung: 18.05.2011
(73) Patentinhaber: Triton GmbH, 14089 Berlin (DE); Deutsches Institut für Lebensmitteltechnik e.V., 49610 Quakenbrück (DE)
(72) Erfinder: KORTSCHACK,Fritz, 14089 Berlin (DE); HEINZ, Volker, 49610 Quakenbrück (DE)
(74) Vertreter: Kruspig, Volkmar
(86) Internationale Anmeldenummer: PCT/EP2009/061362
(87) Internationale Veröffentlichungsnummer: WO 2010/026171

(56) Entgegenhaltungen:
- EP-A- 0 668 026
- WO-A-98/26667
- WO-A-2006/097248
- DE-A1- 19 801 031
- DE-A1-102008 004 242
- US-A- 5 693 350
- KRZIKALLA, K. I.: "Hochdruckinduzierte Veränderungen von Lebensmittelinhaltsstoffen" Februar 2008 (2008-02), BUNDESINSTITUT FÜR RISIKOBEWERTUNG , BERLIN , XP002555373 Kapitel 4.1, 4.2, 4.3.2.1, Abbildungen 9,10
- SCHNEIDER, C.: "Hochdruckbehandlung von Fleisch und Fleischerzeugnissen" [Online] 2. Dezember 2004 (2004-12-02), , XP002555374 Powerpoint presentation Gefunden im Internet: URL:http://www.biologischer-lehrpfad.de/se minare/seminar/Hochdruckbehandlung%20von%2 0Fleisch%20und%20Fleischprodukten.pdf> [gefunden am 2009-11-11] Folien 3, 4, 5, 12, 15, 20
- BELITZ, H.-D., GROSCH, W.: "FOOD CHEMISTRY" 1999, SPRINGER , HEIDELBERG , XP002555375 Seite 562 - Seite 565
- MARCOS, ET AL.: "Evaluation of high pressure processing as an additional hurdle to control Listeria monocytogenes and Salmonella enteritica in low-acid fermented sausages" JOURNAL OF FOOD SCIENCE, Bd. 70, Nr. 7, 2005, Seiten M339-M344, XP002555372
- URESTI ET AL.: "Effect of high-pressure treatments on mechanical and functional properties of restructured products from arrowtooth flounder (Atheresthes stomias)" JOURNAL OF THE SCIENCE OF FOOD AND AGRICULTURE, Bd. 84, 2004, Seiten 1741-1749, XP002555376

## Beschreibung

Die Erfindung betrifft ein Verfahren zur Steuerung der Produkteigenschaften bei der Herstellung von Lebensmitteln, die den Produktgruppen Roh- und Kochwurst, Pasteten, gegarten Fleischwaren oder Ähnlichem zuzurechnen sind, insbesondere zum Erhalt der Streich- oder Schnittfähigkeit, gemäß Oberbegriff des Patentanspruchs 1.

Aus der EP 0 944 329 B1 ist ein Verfahren zur Herstellung stabiler, in Anwesenheit von Mikroorganismen hergestellter Fleisch- und Wurstwaren vorbekannt.

Aufgabe der dortigen Lehre ist es, ein Verfahren anzugeben, nach dem in einfacher und sicherer Weise Fertigungsschritte der Roh- und Dauerwurstherstellung durchgeführt werden können und mit dem ein qualitativ stabiles Endprodukt entsteht.

Das vorbekannte Verfahren zielt darauf, die vorliegenden Halbfabrikate nach dem Erreichen eines gewünschten und zum Halten dieses End-pH-Wertes mehrere Minuten bei Raumtemperatur einer Hochdruckbehandlung zu unterwerfen und dann in üblicher Weise weiterzuverarbeiten. Durch die Hochdruckbehandlung sollen die Aktivitäten der Mikroflora im Halbfabrikat gezielt unterbrochen werden. Damit finden keine relevanten biochemischen Prozesse mehr statt.

In Krzikalla, K.I.: "Hochdruckinduzierte Veränderungen von Lebensmittelinhaltsstoffen", Februar 2008, Bundesinstitut für Risikobewertung, Berlin, XP002555373 wird die Möglichkeit des Einsatzes einer Hochdruckbehandlung zur Haltbarmachung von Mettwürsten untersucht, wobei druckindizierte Veränderungen der Farbe und Konsistenz als unerwünschte Nebenwirkungen beschrieben werden. Die Hochdruckbehandlung wird demnach mit dem Ziel einer Entkeimung und Verlängerung der Haltbarkeit eingesetzt, es erfolgt eine Variation der Verfahrensparameter im Hinblick auf eine optimale Inaktivierung.

In Schneider, C.: "Hochdruckbehandlung von Fleisch und Fleischerzeugnissen" [Online] XP002555374 unter http://www.biologischer-lehrpfad.de/seminare/seminar /Hochdruckbehandlung%20von%20Fleisch%20und%20Fleischprodukten.pdf werden Anwendungsmöglichkeiten einer Hochdruckbehandlung bei Fleisch und Fleischerzeugnissen und die durch Druckeinwirkung auftretenden Veränderungen biologischer Matrices beschrieben. Es wird darauf hingewiesen, dass eine Behandlung von Fleisch(waren) zur Verlängerung der Haltbarkeit erfolgen kann, jedoch auch mit eventuell unerwünschten Veränderungen der Produktstruktur verbunden ist.

In der US 5,693,350 wird ein Verfahren zur Herstellung von Fleischpasteten mit geringem Fettgehalt offenbart. Der Einsatz eines Hochdruckverfahrens, welcher aus Gründen der Produktsicherheit und nicht zur Steuerung der Produktstruktur bzw. Produkteigenschaften erfolgt, ermöglicht die Herstellung eines Produkts mit guter Streichfähigkeit. Zur Steuerung der Produkteigenschaften und Denaturierung der Proteine wird zuvor eine Temperaturbehandlung bei 65°C bis 75°C durchgeführt.

WO 2006/097248 A offenbart ein Verfahren zur Behandlung von Lebensmitteln, insbesondere zum Haltbarmachen von frischen Wurst- oder Fleischwaren, mittels zeitlich befristeter Einwirkung von Temperatur und/oder Druck oder Hochdruck sowie zum anschließenden Inverkehrbringen der Ware, wobei die Ware bereits verpackt dem Behandlungsschritt unterzogen und für mindestens Teile des Verpackungsmaterials eine dehnbare, restelastische oder dauerelastische Eigenschaften aufweisende Folie verwendet wird.

Die DE 10 2008 004 242 A1 offenbart ein Verfahren zur automatisierbaren Herstellung von Rohwurst durch Zerkleinern und Mischen von Fleischteilen oder Fleischstücken sowie Zugeben von Starterkulturen, Gewürzen oder dergleichen Stoffen. Dabei sollen die Fleischteile oder Fleischstücke als Aufgabegut über ein vom Zerkleinerer antriebsseitig separat betreibbares Transport-, insbesondere Mehrfachkolben-Zylindersystem dem Zerkleinerungs- und Mischraum in Abhängigkeit von der Leistungsfähigkeit des oder der Zerkleinerer zugeführt.

Die Technologie der Kochwurst-Herstellung ist dadurch geprägt, dass die Herstellung, insbesondere von Blutwurstsorten, so heiß wie möglich zu erfolgen hat. Auch das zur Verwendung kommende gewürfelte Fleisch- und/oder Speckmaterial muss kochend heiß abgebrüht sein und wird so heiß wie nur irgend möglich verarbeitet. Von großer Wichtigkeit ist es ebenfalls, dass die Würste während der gesamten Garzeit ohne Temperaturabfall gekocht werden. Ein Abkühlen, z.B. durch Zulaufenlassen von kaltem Wasser, auch bei überhöhter Temperatur, wirkt schockartig auf die Kerntemperatur von insbesondere Blutwürsten und führt im Fertigprodukt zu einem zu weichen Kern mit Rotfärbung der Speckwürfel.

Bei der Herstellung von Rohwurstarten ist hinsichtlich schnittfester als auch streichfähiger Rohwurstsortenware zu unterscheiden. Innerhalb dieser Herstellungsverfahren sind weitere Differenzierungen erforderlich, da beispielsweise auch die Körnung sowohl bei schnittfesten als auch bei streichfähigen Rohwürsten eine spezielle Technologie erfordert.

Grundsätzlich ist das Fleischmaterial für schnittfeste Rohwurst vor der eigentlichen Wurstherstellung tiefzukühlen. Die weitere Behandlung des Fleischmaterials vor der eigentlichen Rohwurstherstellung besteht dann im Zerkleinern der tiefgekühlten Fleischblöcke. Je nach Kuttergröße müssen die gefrorenen Stücke etwa Faustgröße haben, damit die Kuttermesser in der Lage sind, das gefrorene Material zu erfassen und zu zerkleinern.

Das Fleisch- und Speckmaterial für die Herstellung streichfähiger Rohwurstsorten soll ebenfalls nur im gut gekühlten Zustand zur Verarbeitung kommen. In der wärmeren Jahreszeit ist es sogar empfehlenswert, das Rohmaterial leicht anzufrieren. Dabei ist auf jeden Fall sicherzustellen, dass das Fleisch nicht bereits im Wolf anfängt zu schmieren, da es unter Umständen mehr gequetscht als geschnitten wird.

Aus dem Vorgenannten ist ersichtlich, dass die Herstellung von Roh- und Kochwurst technologisch sehr aufwendige Schritte erfordert, die nicht ohne weiteres für verschiedene Wurstsorten vereinheitlicht werden können.

Es ist daher Aufgabe der Erfindung, ein weiterentwickeltes Verfahren zur Steuerung der Produkteigenschaften bei der Herstellung von Lebensmitteln, die den Produktgruppen Roh- und Kochwurst, Pasteten, gegarten Fleischwaren oder Ähnlichem zuzurechnen sind, insbesondere zum Erhalt der Streich- oder Schnittfähigkeit anzugeben, das eine sehr hohe Lebensmittelsicherheit und lang anhaltende gute Qualitäten garantiert.

Die Lösung der Aufgabe der Erfindung erfolgt gemäß einem Verfahren nach der Lehre des Patentanspruchs 1, wobei die Unteransprüche mindestens zweckmäßige Ausgestaltungen und Weiterbildungen darstellen.

Es wird demnach bei dem Verfahren zur Steuerung der Produkteigenschaften bei der Herstellung von Rohwurst davon ausgegangen, übliche Ausgangsmaterialien zu nutzen, allerdings diese nicht im tiefgekühlten Zustand, sondern bei Raumtemperatur anzusalzen, zu vermischen und grob zu zerkleinern. Diese Mischung wird dann einer Fermentierung und Absäuerung, d.h. einer gezielten pH-Wertsenkung unterzogen. Anschließend erfolgt erfindungsgemäß eine Hochdruckbehandlung zur Eiweißkoagulation und zur Inaktivierung von Mikroorganismen, wobei die mechanisch getrennten Fleischrohstoffe in ihrer Trennung erhalten bleiben. Weiterhin wird im Anschluss an diese Behandlungsschritte eine Feinzerkleinerung vorgenommen. Die Hochdruckbehandlung ist in diesem Fall als Teil der Fertigungsschritte zu betrachten.

Ausgestaltend kann bei der Herstellung von Rohwurst das abgefüllte Produkt ebenfalls einer weiteren, zweiten Hochdruckbehandlung unterzogen werden.

Hier wiederum besteht die Möglichkeit, die Zugabe von Fett während der Zerkleinerung auf Endkorngröße zu realisieren, worauf dann im Anschluss die zweite Hochdruckbehandlung vorgenommen wird.

Ein alternativer erfindungsgemäßer Lösungsansatz sieht vor, diezgrob vorzerkleinerten Rohstoffe zur Herstellung von streichfähiger Rohwurst nicht nach der pH-Wertsenkung und vor der Zerkleinerung mittels Hochdruck zu behandeln. Durch die Absäuerung erfolgt bereits eine Eiweißdenaturierung, die sicher stellt, dass nach der Zerkleinerung auf Endkorngröße ein Zusammenwachsen der Magerfleischanteile nicht mehr erfolgt.

Vorraussetzung dieses Lösungsansatzes ist jedoch, dass eine vollständige und gleichmäßige Denaturierung der Eiweiße sicher gestellt ist. Nach einer derartigen Behandlung kann das auf Endkorngröße gebrachte Brät in die vorgesehene Umhüllung gebracht und zur Stabilisierung (Inaktivierung der Mikroorganismen) mittels Hochdruck behandelt werden. Zur Stabilisierung bzw. Erhalt der durch Hochdruckbehandlung verblassenden Farbe ist das Feinzerkleinern unter Zuführung von CO₂ möglich.

Bei der Herstellung von Kochwurst werden ebenfalls übliche Ausgangsmaterialien, allerdings im nicht erhitzten Zustand angesalzen, vermischt und grob vorzerkleinert. Diese Mischung wird dann einer Hochdruckbehandlung unterzogen, um über die Höhe des Druckes sowie die Behandlungszeit die spätere Konsistenz des Endprodukts über das Maß der erfolgenden Eiweißdenaturierung vorzugeben.

Im Anschluss an diesen Behandlungsschritt wird das Rezepturgemisch auf die Endkörnung zerkleinert und ein Abfüllen in eine Verkaufsumhüllung oder Verpackung vorgenommen. Hieran kann sich eine zweite Hochdruckbehandlung anschließen, so dass insgesamt Fett- und Geleeabsätze, unabhängig von der Rohstoffzusammensetzung, im Produkt verhindert sind und die Streichfähigkeit des Produkts erhalten bleibt.

Bei der Herstellung von Kochwurst kann das Produkt auch in einem wasserdurchlässigen Darm oder einer entsprechenden Hülle abgefüllt werden. Selbst bei einer derartigen Abfüllmaterial-Konstellation bleibt das Produkt länger streichfähig, als es bisher mit der bekannten Technik der Abtrocknung der Fall ist.

Alternativ sieht es die erfindungsgemäße Lehre vor, bei der Herstellung von Kochwurstprodukten, Pasteten etc. zur Erzielung einer relativ festen Konsistenz, die fertigen Rohstoff-, Salz- und Gewürzmischungen ohne vorherige Hochdruckbehandlung auf Endkörnung zu bringen um dann nach dem Abfüllen der umgeröteten Masse in die dafür vorgesehenen Umhüllungen, diese zur Stabilisierung mittels Hochdruck zu behandeln.

Ein weiterer erfindungsgemäßer Gedanke sieht vor, bei der Herstellung gegarter Fleischwaren, wie z. B. Kochschinken, Schweinebraten, Kasseler usw. zunächst die entsprechenden Rohmaterialien zu parieren, um sie anschließend optional zu würzen bzw. zu salzen und dieses Rohmaterial einer Hochdruckbehandlung zu unterziehen, um über die Höhe des Druckes sowie die Behandlungszeit die spätere Konsistenz des Endprodukts über das Maß der Eiweißdenaturierung vorzugeben. Das Endprodukt wird anschließend in eine Endverbraucherpackung gegeben, wobei das Endprodukt in diesem Zustand einer optionalen weiteren Druckbehandlung unterzogen werden kann.

Ferner kann ein Verfahren zur Herstellung von Kochpökelwaren zunächst den Schritt des Würzens und das anschließende Formstabilisieren durch Anfrosten, das Schneiden in Scheiben und die Verpackung der einzelnen Scheiben umfassen.

Die in der Verpackung befindlichen Scheiben können langsam temperiert und anschließend hochdruckbehandelt werden. Zudem ist es denkbar erst die Hochdruckbehandlung zu vollziehen und anschließend die Kochpökelware zu temperieren.

Ein alternatives erfindungsgemäßes Verfahren sieht zunächst das Würzen des Rohstoffes (für Kochpökelwaren) und anschließendes Füllen in eine formgebende Umhüllung vor. Das derartig verpackte Rohmaterial wird einer Hochdruckbehandlung bei beispielsweise 6.000 bar für einen Zeitraum von 3 Minuten unterzogen. Das behandelte Material kann durch Anfrosten formstabilisiert, danach aufgeschnitten und temperiert werden. Die Temperierung erfolgt beispielsweise bei mehr als 55°C und kann in der Verpackungslinie erfolgen. Daran kann sich eine zweite Hochdruckbehandlung anschließen.

Aufgrund dieser Vorgehensweise muss erheblich geringere thermische Energie aufgebracht werden um die ebenfalls in der Gradzahl verringerte Temperaturbereiche zu erreichen.

Des Weiteren wird durch geeignete Maßnahmen wie z. B. das Anheben des pH-Wertes der sonst deutlich ausfallende Farbverlust bei Kochpökelwaren, Kochschinken, Kasseler, marinierten Produkten usw. reduziert. Ebenfalls wird eine Erhöhung des Zartheitsgrades erzielt.

Die erfindungsgemäße Hochdruckbehandlung von frischem und mariniertem Geflügelfleisch führt zu einer erheblichen Entkeimung und eine damit verbundene erhöhte Haltbarkeit der Produkte. Eine Hochdruckbehandlung von marinierten Putenfilets bei einem Druck von 600 MPa für eine Zeitdauer von 5 min führt beispielsweise zu einer Verlängerung der Haltbarkeit von ca. 10 Tagen auf mindesten 28 Tage.

Neben der erwünschten Entkeimung kann durch Struktur- bzw. Konformationsänderungen die Denaturierung, Assoziation, Aggregation oder Gelbildung von Proteinen ausgelöst werden. Die Proteinveränderungen werden im Allgemeinen von folgenden Parametern beeinflusst: pH-Wert, Ionenkonzentration, Temperatur und Zeitpunkt der Druckbehandlung, Proteinkonzentration und Lagerbedingungen. Hochdruckinduzierte Proteinveränderungen können wesentliche funktionelle und qualitative Eigenschaften der Fleischprodukte beeinflussen, unter anderem sind hier die Scherkraft, die Möglichkeit zur Immobilisierung von Wasser sowie die Farbe zu nennen.

Erfindungsgemäß lässt sich mit einer Hochdruckbehandlung eines marinierten Geflügelfleisches eine Erhöhung des Wasserhaltevermögens erzielen. Insbesondere bei angesäuerten Ausgangsmaterialien kann eine Verringerung im Vergleich zu nativen Proben festgestellt werden, während diese bei basisch marinierten Proben geringer ausfällt. Der pH-Wert hat demnach einen wesentlichen Einfluss auf hochdruckinduzierte Veränderungen der Produkteigenschaften.

Eine Anpassung der Marinadenzusammensetzung bietet die Möglichkeit zur Vermeidung oder Minimierung unerwünschter Reaktionen. Des Weiteren sei angemerkt, dass eine Erhöhung des pH-Wertes nicht zu einer Verringerung der Lagerfähigkeit des zu behandelnden Rohmaterials führt.

Werden zunächst durch das Marinieren von Fleisch Verringerung der Schneidkraft erzielt, kann bei einer Hochdruckbehandlung bei sauer marinierten Rohmaterialien eine Erhöhung der Schneidkraft herbeigeführt werden.

Des Weiteren sieht die erfindungsgemäße Lehre vor, durch die Hochdruckbehandlung von mariniertem Fleisch eine Änderung der Farbe zu erzielen. Basisch marinierte Fleischstücke zeigen in diesem Zusammenhang die geringste Veränderung der Farbe, welche durch die Hochdruckbehandlung generell eine Aufhellung erfährt.

Die erfindungsgemäße Produktion von Sülzen stellt sich unter Verwendung von Hochdruck wie folgt dar:
Umgerötetes und eventuell gewürztes rohes oder nur gering erhitztes (ca. 55°C) Fleisch, Zungen usw. werden unter Zugabe von optional weiteren Beigaben wie Gemüse, Pilze usw. in einen Behälter verbracht, in dem der Boden zweckmäßigerweise bereits mit einem gelierfähigem Aufguss bedeckt ist. Der Aufguss kann dabei warm oder kalt sein.

Das Behältnis wird schrittweise mit Füllgut und Geliermasse z. B. Aspik gefüllt, luftdicht verschlossen und möglichst nach dem Erkalten der Aufgussmasse der Hochdruckbehandlung zugeführt. Das in der luftdicht verpackten Umhüllung behandelte Produkt ist anschließend verkaufsfertig. Die Hochdruckbehandlung bei der Produktion von Sülzprodukten trägt zur Erzielung der Farbstabilität und Erhöhung der Zartheit des Einlagefleisches bei.

Die erfindungsgemäße Lehre sieht des Weiteren eine Anwendung der Hochdruckbehandlung bei der Herstellung von Fertigprodukten wie Frikadellen, Cevapcici usw. vor. Die Rohstoffe werden gewürzt, angesalzen und evtl. unter Zusatz von Brataromen vermengt, zerkleinert, ausgeformt und je nach Produkt mit Panade versehen. Sofern erforderlich kann die Oberfläche mittels eines Bräunungspräparats und/oder thermischer Behandlung gefärbt und auch mit einer Kruste versehen werden. Die derart behandelten Rohmaterialien werden in einer luftdichten, möglichst teilweise formstabilen Umhüllung dem Hochdruck ausgesetzt. Nach dieser Behandlung ist das Produkt formstabil und verzehrfertig.

Produkte wie beispielsweise Schnitzel, Chickenwings usw. können nach dem Würzen und Ansalzen in der Verpackung dem Hochdruck ausgesetzt werden, sodass derartige Produkte ähnlich den thermisch behandelten Produkten formstabil und evtl. durch Zugabe von Brataromen zur Panade ähnliche verzehrfertige Eigenschaften haben, wie die am Markt befindlichen thermisch behandelten Waren.

Die Erfindung soll nachstehend anhand eines Ausführungsbeispiels näher erläutert werden.

Ein Grundgedanke der Erfindung besteht u. a., wie bereits weiter oben geschildert, in der langfristigen Erhaltung der Streichfähigkeit des Fertigprodukts durch eine spezielle Hochdruckbehandlung des noch auf Endkorngröße zu zerkleinernden Rohmaterials bzw. Rohmaterialgemisches.

Bei der Herstellung von streichfähiger Rohwurst wird das Rohmaterial grob vorzerkleinert, mit Salz und Gewürzen sowie eventuellen Starterkulturen versehen.

Im Nachgang erfolgt die gewünschte Umrötung, Absäuerung und Fermentierung bei hierfür geeigneten Temperaturen, z.B. ca. 18°C über einen Zeitraum von ca. 24 Stunden.

Dieses gereifte, fermentierte Gemisch wird dann einer Hochdruckbehandlung unterzogen. Denkbar sind hier Druckbereiche von bis zu 6000 bar und darüber bei einer Haltezeit von im Wesentlichen 3 Minuten. Diese Hochdruckbehandlung führt dann zur gewünschten Eiweißkoagulation.

Nachdem die Hochdruckbehandlung vorgenommen wurde, werden die entsprechend behandelten Rohstoffe auf Endkörnung gebracht, und zwar gemäß den zu erreichenden Zielprodukten für Teewurst, grobe Teewurst, Zwiebelwurst, Braunschweiger etc. Es erfolgt in diesem Sinne eine Abfüllung in Därme, Becher oder andere geeignete Umhüllungen.

Wenn luftdurchlässige Därme wie bei Teewurst oder Braunschweiger zur Anwendung kommen, kann dann ein Räucherschritt realisiert werden.

Ausgestaltend besteht die Möglichkeit, die Fertigprodukte erneut mittels Hochdruck zu behandeln, um alle unerwünschten Einflüsse durch eine mögliche Rekontamination nach der ersten Hochdruckbehandlung auszuschließen.

Vorteil des beschriebenen Verfahrens ist neben der länger anhaltenden Streichfähigkeit des Fertigprodukts, die vollständige Inaktivierung von Mikroorganismen, wobei der pH-Wert über einen langen Zeitraum konstant bleibt.

Es sei an dieser Stelle darauf hingewiesen, dass gemäß der Lehre des Hauptanspruchs zwischen zwei Produkten, nämlich Rohwurst und Kochwurst, zu unterscheiden ist.
Bei Rohwurstprodukten ist der pH- und der aw-Wert zu senken und eine Fermentierung vorzunehmen.
Kochwürste erhalten primär durch eine ausreichende Koagulation der Eiweiße ihre produktspezifischen Eigenschaften.

Gemäß einem weiteren Ausführungsbeispiel bei der Fertigung streichfähiger Wurst mit den Produkteigenschaften von Rohwurst wird ein möglichst magerfleischiges, d.h. ohne Speck versehenes Rohmaterial angesalzen.

Neben Nitritpökelsalz kann hier auch Kochsalz verwendet werden, da eventuell vorhandene Mikroorganismen durch die sich anschließende Hochdruckbehandlung zuverlässig inaktiviert werden.

Wenn notwendig, wird Zucker für die pH-Wertabsenkung durch Mikroorganismen hinzugefügt. Ebenfalls können Starterkulturen oder GDL zugegeben werden.

Selbstverständlich besteht die Möglichkeit, Gewürze in die Vormischung oder während der Endzerkleinerung hinzuzufügen.

Die Rohmaterialmischung wird dann grob vorzerkleinert und anschließend temperiert, so dass bei der Lagerung die Umrötung (nur bei Einsatz von Nitritpökelsalz) bzw. die Fermentierung und Absäuerung erfolgen können.

Falls keine wasseraufnehmenden Stoffe zur aw-Wertsenkung zugegeben werden, findet während der Lagerung in geeigneten Räumen die erforderliche Abtrockung statt.

Da die.Umrötungs-, Fermentierungs- und pH-Wertsenkungsphase ausschließlich mit magerfleischhaltigem Rohmaterial erfolgt, ist der aw-Wert gegenüber der Gesamtmischung höher, was eine schnellere Reifung und pH-Wertsenkung unterstützt. Zusätzlich erleichtert der höhere Ausgangswassergehalt der Rohstoffe die notwendige Abtrocknung.

Das fermentierte und pH-wertgesenkte Rohmaterial wird mit oder ohne Zugabe der reinen Fettanteile dann hochdruckbehandelt, um eine Koagulation des Eiweißes und eine Inaktivierung von Mikroorganismen zu erreichen.

Diese Behandlung bewirkt, dass der pH-Wert unmittelbar leicht ansteigt, aber dann über einen längeren Zeitraum konstant bleibt und das Eiweiß koaguliert.

Durch diese Verfahrensschritte bleiben die einzelnen mechanisch getrennten Fleischteile während der weiteren Produktionsschritte und der Lagerung getrennt. Damit bleibt das Produkt sehr lange streichfähig.

Falls das später abzufüllende Produkt ein zweites Mal zur Inaktivierung von Mikroorganismen, die während des Produktionsvorgangs (Zerkleinern und Füllen) in das Brät gelangen, hochdruckbehandelt wird, ist es empfehlenswert, die Zugabe von Fett (Speck) erst während der Zerkleinerung auf Endkorngröße vorzunehmen.

Die vorstehend erwähnte Vorgehensweise hat den Vorteil, dass die Zerkleinerung des Fettes gleichmäßiger ausfällt, da die Hochdruckbehandlung das Fett geschmeidig werden lässt.

Die auf Endkörnung zerkleinerten Rezepturbestandteile werden dann in vorgesehene Umhüllungen gefüllt.
Dabei bleibt selbst in einem wasserdurchlässigen Darm das Produkt lange streichfähig. Luft- und wasserundurchlässige Packungen, in die das zerkleinerte Material gefüllt wird, können zur Erhöhung der Produktsicherheit und Haltbarkeit ein weiteres ergänzendes Mal einer Hochdruckbehandlung unterzogen werden.

Streich- oder schnittfeste Wurst oder Pasteten mit den Produkteigenschaften von Kochwurst werden gemäß nachstehendem Beispiel realisiert.

Die Rohmaterialien werden grob vorzerkleinert und dann mit Salz, auch hier ist der Einsatz von Kochsalz möglich, und Gewürzen vermengt.

Falls Nitritpökelsalz eingesetzt wird, ist zur dauerhaften Farbgebung, d.h. Umrötung, eine Zwischenlagerung des Gemisches notwendig. Aufgrund der Bildung von cancerogener Stoffen, ist es jedoch von Vorteil, auf die Verwendung von Pökelsalzen zu verzichten. Dies kann ohne Weiteres durch die Anwendung der Hochdruckbehandlung realisiert werden, da diese eine ähnlich konservierende Wirkung wie die Verwendung von Nitriten entfaltet, jedoch ohne die gesundheitsgefährdende Erzeugung krebserregender Stoffe.

Falls eine Rohstoffkomponente Leber ist, kann diese der Gesamtmischung zugefügt werden. Es besteht aber auch die Möglichkeit, diese separat, eventuell schlachtwarm aufzubereiten.

Üblicherweise wird Kochwurst aus fettreichem und magerem Fleisch unter Zugabe spezifischer Produkte, wie z.B. Leber oder Blut, hergestellt.

Vorteilhafterweise sind die Magerfleischanteile eingewachsen.

Die vorbereiteten Rohmaterialien werden dann einer Hochdruckbehandlung unterzogen. Durch die Höhe und die Haltezeit des Hochdrucks kann die spätere Konsistenz des Endprodukts gezielt beeinflusst werden.

Über die Einstellmöglichkeiten Druckhöhe und Haltezeit lassen sich unterschiedlichste Anforderungen an die Konsistenz des jeweiligen Endprodukts, d.h. streichfähig bis schnittfest erfüllen.

Je niedriger die Druckhöhe und je kürzer die Haltezeiten gewählt werden, desto geringer fällt der Grad der angestrebten Eiweißdenaturierung aus.

Eine ergänzende Variante ist die Zugabe von eventuell schlachtwarmer Leber oder vorbehandeltem, rohem Fleisch während des finalen Zerkleinerungsprozesses zu den bereits druckvorbehandelten Rohmaterialien.

In diesem Fall ist es aus den Gründen der Lebensmittelsicherheit erforderlich, dass die entsprechend befüllten Endpackungen nochmals mittels Hochdruck behandelt werden. Schnittfeste Produkte benötigen gegebenenfalls nur die Hochdruckbehandlung nach der finalen Zerkleinerungs- und Mischphase.

Wie in der Beschreibungseinleitung ausgeführt, erfordert der übliche Vorgang der Rohstoffaufbereitung für Kochwurstprodukt ein Erhitzen der Rezepturkomponenten. Bei dieser Erhitzung gehen Fleischeiweiß, Feuchtigkeit und sonstige Inhaltsstoffe, auch Vitamine verloren.
Zum Ausgleicht des Feuchtigkeitsverlusts wird eine sogenannte Brühe während der Endzerkleinerung zugefügt. Zur Vermeidung von Fehlprodukten wegen einer zu hohen mikrobiellen Belastung ist eine anschließende erneute Pasteurisierung der Fertigprodukte gemäß dem Stand der Technik üblich.
Die Rohstoffbehandlung für Kochwurst mittels Hochdruck ermöglicht eine Fertigung ohne Vitamin-, Fleischeiweiß-, Gewürz-, Salz- oder Feuchtigkeitsverluste. Eine Zufügung von Fremdwasser erübrigt sich. Die Fertigung ist daher umweltfreundlich und es müssen keine schwer abbaubare Abfälle entsorgt werden.

Der Füllvorgang bei der Herstellung von Kochwurst setzt zunächst ein Zerkleinern des Rezepturgemisches auf Endkorngröße voraus. Das zerkleinerte Gemisch wird dann in vorgesehene Umhüllungen gefüllt und nochmals mittels Hochdruck behandelt.

Durch diese weitere Hochdruckbehandlung wird der ansonsten beim Fertigprodukt häufig zu beobachtende Fettabsatz verhindert.

Bei der vorgestellten Methodik bleibt selbst in einem wasserdurchlässigen Darm das Produkt wesentlich länger streichfähig, als es dies bisher aufgrund der eintretenden Abtrockung möglich war.

Abschließend sei angemerkt, dass die mittels Hochdruck behandelten Fertigprodukte einen geringeren Austrocknungsgrad der angeschnittenen Präsentationsflächen wie sie beispielsweise in Ladentheken angeboten werden, aufweisen.

## Patentansprüche

1. Verfahren zur Steuerung der Produkteigenschaften bei der Herstellung von Lebensmitteln, die den Produktgruppen Rohwurst, Pasteten, gegarten Fleischwaren oder Ähnlichem zuzurechnen sind, insbesondere zum Erhalt der Streich- oder Schnittfähigkeit,
**dadurch gekennzeichnet, dass**
bei der Herstellung von Rohwurst übliche Ausgangsmaterialien, allerdings im nicht tiefgekühlten Zustand, angesalzt, vermischt und grob vorzerkleinert werden und diese Mischung einer Fermentierung und Absäuerung, d.h. pH-Wertsenkung unterzogen wird,
anschließend eine Hochdruckbehandlung zur Eiweißkoagulation und Inaktivierung von Mikroorganismen vorgenommen wird, wobei die mechanisch getrennten Fleischrohstoffe in ihrer Trennung erhalten bleiben sowie weiterhin eine Feinzerkleinerung nach dem Hochdruckbehandlungsschritt erfolgt.

2. Verfahren nach Anspruch 1,
**dadurch gekennzeichnet, dass**
das abgefüllte Produkt einer weiteren Hochdruckbehandlung unterzogen wird.

3. Verfahren nach Anspruch 2,
**dadurch gekennzeichnet, dass**
die Zugabe von Fett während der Zerkleinerung auf Endkorngröße erfolgt und die zweite Hochdruckbehandlung im Anschluss hieran vorgenommen wird.

4. Verfahren zur Steuerung der Produkteigenschaften bei der Herstellung von Lebensmitteln, die den Produktgruppen Kochwurst, Pasteten, gegarten Fleischwaren oder Ähnlichem zuzurechnen sind, insbesondere zum Erhalt der Streich- oder Schnittfähigkeit,
**dadurch gekennzeichnet, dass**
bei der Herstellung von Kochwurst übliche Ausgangsmaterialien im nicht erhitzten Zustand eingesalzt, vermischt und grob vorzerkleinert werden und diese Mischung einer Hochdruckbehandlung unterzogen wird, um über die Höhe des Druckes sowie die Behandlungszeit die spätere Konsistenz des Endprodukts über das Maß der Eiweißdenaturierung vorzugeben, wobei das danach auf Endkörnung zerkleinerte Rezepturgemisch in eine Verkaufsumhüllung gefüllt und einer zweiten Hochdruckbehandlung ausgesetzt wird, so dass insgesamt Fettabsätze im Produkt verhindert werden und die Streichfähigkeit erhalten bleibt.

5. Verfahren nach Anspruch 4,
**dadurch gekennzeichnet, dass**
das Produkt in einem wasserdurchlässigen Darm oder einer wasserdurchlässigen Hülle abgefüllt wird.

## Claims

1. Method for controlling product characteristics in the manufacture of foods belonging to the product groups of raw sausage, meat pies, cooked meat products or the like, in particular for obtaining spreadability or sliceability,
**characterized in that**
in the manufacture of raw sausage, usual starting materials, however, not in the refrigerated state, are salted, mixed and preliminarily coarsely chopped, and said mixture is subjected to fermentation and acidification, i.e. pH reduction, subsequently, a high-pressure treatment is performed for the purpose of protein coagulation and deactivation of microorganisms, wherein the mechanically separated meat raw materials remain in their separated state, and furthermore fine chopping takes place after the high-pressure treatment step.

2. Method according to claim 1,
**characterized in that**
the filled product is subjected to a further high-pressure treatment.

3. Method according to claim 2,
**characterized in that**
the addition of fat is performed during the chopping to the final grain size, and the second high-pressure takes place subsequently thereto.

4. Method for controlling product characteristics in the manufacture of foods belonging to the product groups of raw sausage, meat pies, cooked meat products or the like, in particular for obtaining spreadability or sliceability,
**characterized in that**
in the manufacture of cooked sausage, usual starting materials are salted, mixed and preliminarily coarsely chopped in the non-heated state, and said mixture is subjected to a high-pressure treatment in order to predetermine, by way of the degree of protein denaturation, the later consistency of the final product using the pressure level and the treatment time, wherein the formulation mixture, which is then chopped up to the final grain size, is filled into a retail packaging and subjected to a second high-pressure treatment so that fat deposits as a whole are avoided in the product and the spreadability is maintained.

5. Method according to claim 4,
**characterized in that**
the product is filled into a water-permeable casing or a water-permeable skin.

## Revendications

1. Procédé pour commander les propriétés des produits lors de la fabrication de produits alimentaires, auxquels appartiennent les groupes de produits incluant les saucisses crues, les pâtés, les produits à base de viande cuite ou similaire, en particulier pour conserver la possibilité d'être étalés ou d'être coupés,
**caractérisé en ce que**
lors de la fabrication de saucisses crues, des matériaux de départ habituels, dans une condition en réalité non congelée, sont salés, mélangés et grossièrement hachés, et ce mélange est soumis à une fermentation et une diminution d'acidité, c'est-à-dire une diminution du pH,
à la suite de quoi on effectue un traitement sous haute pression pour la coagulation de l'albumine et l'inactivation des micro-organismes, et dans lequel les produits bruts à base de viande mécaniquement séparés restent conservés dans leur séparation et dans lequel, après l'opération de traitement sous haute pression, on effectue un hachage fin.

2. Procédé selon la revendication 1,
**caractérisé en ce que** le produit rempli est soumis à un autre traitement sous haute pression.

3. Procédé selon la revendication 2,
**caractérisé en ce que** l'addition de matière grasse a lieu pendant le hachage à la taille de particules finales, et **en ce que** l'on exécute le second traitement sous haute pression à la suite de celle-ci.

4. Procédé pour commander les propriétés des produits lors de la fabrication de produits alimentaires, auxquels appartiennent les groupes de produits incluant les saucisses cuites, les pâtés, les produits à base de viande cuite ou similaire, en particulier pour conserver la possibilité d'être étalés ou d'être coupés,
**caractérisé en ce que** lors de la fabrication de saucisses cuites, des matériaux de départ habituels, dans une condition non chauffée, sont salés, mélangés et grossièrement hachés, et ce mélange est soumis à un traitement sous haute pression, afin d'imposer, au moyen de l'intensité de la pression ainsi que du temps de traitement, la consistance ultérieure du produit final via le degré de dénaturation de l'albumine, dans lequel le mélange de produits hachés à la taille finale est rempli dans une enveloppe de vente et est exposé à un second traitement sous haute pression, de sorte que l'on empêche dans l'ensemble la formation de dépôts de matières grasses dans le produit et que l'on conserve la capacité d'étalement.

5. Procédé selon la revendication 4,
**caractérisé en ce que** le produit est rempli dans un boyau perméable à l'eau ou dans une enveloppe perméable à l'eau.
